# EUROPEAN PATENT SPECIFICATION

(11) **EP 4 161 147 B1**
(45) Date of publication and mention of the grant of the patent: **18.11.2026**
(21) Application number: 21813954.1
(22) Date of filing: 28.05.2021
(51) Int. Cl.: H04W 36/00, H04W 36/14, H04W 84/04, H04W 92/12, H04W 92/20

(54) **NETWORK SWITCHING METHOD AND APPARATUS, AND COMMUNICATION DEVICE AND SYSTEM**
NETZWERKUMSCHALTVERFAHREN UND -VORRICHTUNG SOWIE KOMMUNIKATIONSVORRICHTUNG UND -SYSTEM
PROCÉDÉ ET APPAREIL DE COMMUTATION DE RÉSEAU, ET DISPOSITIF ET SYSTÈME DE COMMUNICATION

(30) Priority: 29.05.2020 CN 202010480061
(43) Date of publication of application: 05.04.2023
(73) Proprietor: Vivo Mobile Communication Co., Ltd., Dongguan, Guangdong 523863 (CN)
(72) Inventor: LIU, Jinhua, Dongguan, Guangdong 523863 (CN)
(74) Representative: Lavoix
(86) International application number: PCT/CN2021/096961
(87) International publication number: WO 2021/239138

(56) References cited:
- WO-A1-2019/246446
- WO-A1-2019/246446
- WO-A1-2020/067736
- CN-A- 111 093 286
- CN-A- 111 093 286
- US-A1- 2022 322 464
- ZTE ET AL: "Discussion on inter-CU IAB migration handling", vol. RAN WG3, no. Chongqing, China; 20191014 - 20191018, 4 October 2019 (2019-10-04), XP051792719, Retrieved from the Internet <URL:http://www.3gpp.org/ftp/tsg_ran/WG3_Iu/TSGR3_105bis/Docs/R3-195694.zip> [retrieved on 20191004]
- QUALCOMM INC ET AL: "IAB inter-CU Topology Adaptation for Arch 1a", vol. RAN WG3, no. Spokane, WA, USA; 20181112 - 20181116, 11 November 2018 (2018-11-11), XP051558244, Retrieved from the Internet <URL:http://www.3gpp.org/ftp/Meetings%5F3GPP%5FSYNC/RAN3/Docs/R3%2D186456%2Ezip> [retrieved on 20181111]
- ZTE ET AL.: "Discussion on Inter-CU IAB Migration Handling", 3GPP TSG RAN WG3 MEETING #105BIS R3-195694, 4 October 2019 (2019-10-04), XP051792719

## Description

### TECHNICAL FIELD

This application relates to the field of communication technologies, and specifically to a network migration method and apparatus, a communications device, and a communications system.

### BACKGROUND

An integrated access backhaul (Integrated Access Backhaul, IAB) system includes a distributed unit (Distributed Unit, DU) function part and a mobile termination (Mobile Termination, MT) function part. In one integrated access backhaul loop, DUs of all IAB nodes are connected to one centralized unit (Centralized Unit, CU) node, and that CU node performs configuration for the DUs and MTs.

During inter-CU IAB node migration, a migrating IAB node migrates from a source parent IAB node controlled by a source CU to a target parent IAB node controlled by a target CU, meaning that during the migration, both IAB-MT and IAB-DU of the migrating IAB node need to migrate so as to connect to a donor (donor) IAB node and to be controlled by the target CU.

However, there is no solution in the related art at present how a migrating IAB-DU migrates to a target CU, and therefore migration of an IAB node from a source network (that is, network controlled by a source CU) to a target network (network controlled by a target CU) cannot be realized.
WO 2019/246446A1 discloses maintaining communication and signaling interfaces through a donor base station handover. CN 111093286 A discloses a connection establishment method and device, a set access backhaul node and a storage medium. Document by ZTE ET AL (3GPP DRAFT; R3-195694, MOBILE COMPETENCE CENTRE; 650, no. Chongqing, China; 20191014-20191018) discloses a discussion on inter-CU IAB migration handling.

### SUMMARY

Embodiments of this application are intended to provide a network migration method and apparatus, a communications device, and a communications system, as defined in the appended set of claims, to resolve the problem in the related art that an IAB node cannot migrate from a source network to a target network.

In the embodiments of this application, a source CU can send context information of a DU of a migrating IAB node to a target CU, so that the target CU can send first configuration information (that is, information for network migration configured by the target CU for the DU) to the source CU according to the context information of the DU; and the source CU sends the first configuration information to the IAB node, so that the IAB node implements a migration procedure of the DU according to the first configuration information. In this way, the migrating IAB-DU can migrate from a source network to a target network.

### BRIEF DESCRIPTION OF DRAWINGS

FIG. 1 is a schematic diagram of an architecture of an IAB system according to an embodiment of this application;
FIG. 2 is a block diagram of a wireless communications system according to an embodiment of this application;
FIG. 3 is a schematic diagram of a CU-DU structure of an IAB system according to an embodiment of this application;
FIG. 4 is a first schematic diagram of a network migration method according to an embodiment of this application;
FIG. 5 is a second schematic diagram of a network migration method according to an embodiment of this application;
FIG. 6 is a first schematic structural diagram of a network migration apparatus according to an embodiment of this application;
FIG. 7 is a second schematic structural diagram of a network migration apparatus according to an embodiment of this application;
FIG. 8 is a third schematic structural diagram of a network migration apparatus according to an embodiment of this application;
FIG. 9 is a schematic structural diagram of a communications device according to an embodiment of this application;
FIG. 10 is a schematic diagram of hardware of a CU according to an embodiment of this application; and
FIG. 11 is a schematic diagram of hardware of an IAB node according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application as defined by the appended set of claims.

The terms "first", "second", and the like in this specification and claims of this application are used to distinguish between similar objects instead of describing a specific order or sequence. It should be understood that the data used in this way is interchangeable in appropriate circumstances so that the embodiments of this application can be implemented in other orders than the order illustrated or described herein. Moreover, the objects distinguished by "first" and "second" are usually of one type, and the number of objects is not limited. For example, the first object may be one or more than one. In addition, "and/or" in the specification and claims represents at least one of connected objects, and the character "/" generally indicates that the associated objects have a "or" relationship.

Some concepts and/or terms used in the network migration method and apparatus, the communications device, and the communications system that are provided in the embodiments of this application are explained below.

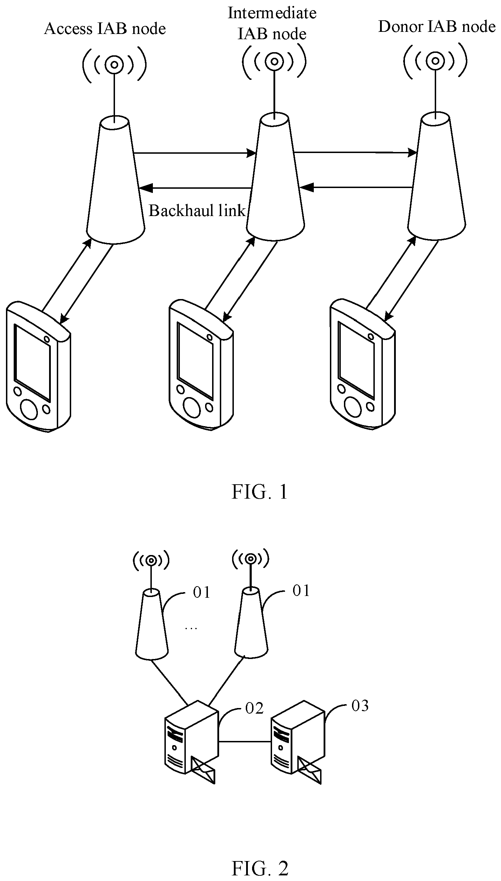

IAB system: FIG. 1 is a schematic diagram of an architecture of an IAB system. An IAB node includes a DU function part and an MT function part. Relying on the MT, one access point (that is, the IAB node) can find an upstream access point (parent IAB node) and establish a wireless connection with a DU of the upstream access point, where the wireless connection is referred to as a backhaul link (backhaul link). After the IAB node establishes a complete backhaul link, the IAB node enables its DU function so that the DU provides cell service, that is, the DU is able to provide access service for user equipment (user equipment, UE). A backhaul loop includes one donor (donor) IAB node (or referred to as IAB donor), and the donor IAB node has a directly connected wired transmission network. The IAB system is introduced in order to solve the lack of deployment of a wired transmission network in the case of dense deployment of access points. That is, when there is no wired transmission network, access points can rely on wireless backhaul.

UE may also be called a terminal device, which may be a terminal side device such as a mobile phone, a tablet personal computer (Tablet Personal Computer), a laptop computer (Laptop Computer) or notebook computer, a personal digital assistant (Personal Digital Assistant, PDA), a handheld computer, a netbook, an ultra-mobile personal computers (ultra-mobile personal computer, UMPC), a mobile Internet device (Mobile Internet Device, MID), a wearable device (Wearable Device), a vehicle-mounted user equipment (VUE), or a pedestrian user equipment (PUE). The wearable device includes a bracelet, an earphone, glasses, and the like. It should be noted that a specific type of the UE is not limited in the embodiments of this application.

It is worth noting that the technology described in the embodiments of this application is not limited to long term evolution (Long Term Evolution, LTE)/LTE-Advanced (LTE-Advanced, LTE-A) systems, but may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, the technology described herein may be used in the above-mentioned systems and radio technologies as well as other systems and radio technologies. However, in the following descriptions, a new radio (New Radio, NR) system is described for illustration purposes, and NR terms are used in most of the following descriptions, although these technologies may also be applied to other applications than the NR system application, for example, 6th generation (6th Generation, 6G) communications systems.

FIG. 2 is a block diagram of a wireless communications system to which the embodiments of this application may be applied. The wireless communications system includes at least one IAB node 01, a source CU 02, and a target CU 03.

The at least one IAB node 01 may establish a connection with the source CU 02, and the source CU 02 may establish a connection with the target CU 03.

It should be noted that the connection between the at least one IAB node 01 and the source CU 02 and the connection between the source CU 02 and the target CU 03 may both be wireless. In FIG. 2, solid lines are used to indicate the connection between the at least one IAB node 01 and the source CU 02 and the connection between the source CU 02 and the target CU 03.

Information (for example, a migration request message in the embodiments of this application) can be exchanged between the source CU and the target CU to control the IAB node to implement network migration (for example, migration from a network controlled by the source CU to a network controlled by the target CU).

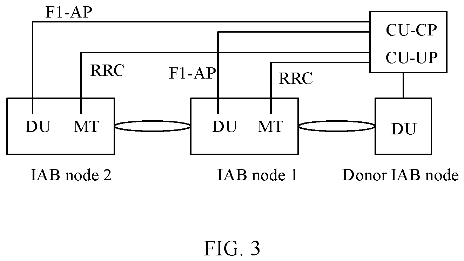

FIG. 3 is a schematic diagram of a CU-DU structure of an IAB system. In a backhaul loop, DUs of all IAB nodes are connected to one CU node, and that one CU node performs configurations for the DUs through F1 application protocol (F1-Application Protocol, F1-AP) signaling. The CU performs configuration for the MTs through RRC signaling. The donor IAB node has no MT function part.

The following specifically describes the network migration method provided in the embodiments of this application through specific embodiments and application scenarios thereof with reference to the accompanying drawings.

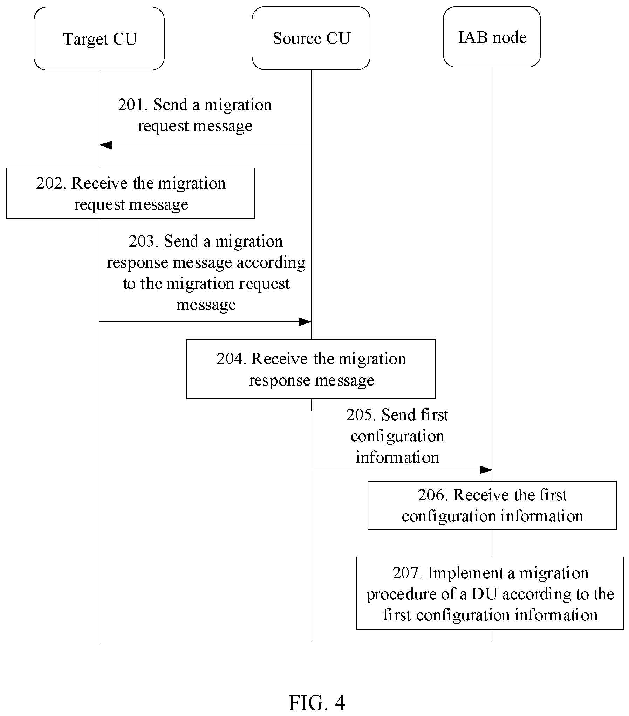

Based on the foregoing communications system, an embodiment of this application provides a network migration method. As shown in FIG. 4, the network migration method may include the following step 201 to step 207.

Step 201. A source CU sends a migration request message to a target CU.

In this embodiment of this application, the migration request (migration request) message includes first target information, where the first target information is context (context) information of a DU of a migrating IAB node.

Optionally, in this embodiment of this application, the first target information includes at least one of the following: system information of the DU, synchronization signal block (Synchronization Signal Block, SSB) information of the DU, physical cell identifier (Physical Cell Identifier, PCI) information/E-UTRAN cell global identity (E-UTRAN Cell Global Identity, ECGI) information of the DU, tracking area code (Tracking Area Code TAC) information of the DU, RANAC (that is, radio access network (Radio Access Network, RAN) based notification area code (Area Code, AC)) information of the DU, uplink and downlink (that is, direction) information of the DU, capability information of the DU, uplink and downlink load of the DU, power allocation information between the DU and an MT of the IAB node, guard (guard) symbol (desired/provided guard symbol) information corresponding to the DU, and interference information of a backhaul/access link (Backhaul/access link) corresponding to the DU.

Optionally, in this embodiment of this application, the system information of the DU is any one of the following: master system information block (Master Information Block, MIB) information, target system information block (System Information Block, SIB) information (for example, SIB1 information), and other SIB information, where the other SIB information is SIB information other than the target SIB information.

Optionally, in this embodiment of this application, the system information of the DU includes at least one of the following: public land mobile network (Public Land Mobile Network, PLMN) information of a cell corresponding to the DU, bandwidth part (Bandwidth Part, BWP) information corresponding to the DU, carrier information corresponding to the DU, slice information corresponding to the DU, general random access information corresponding to the DU, IAB-specific (specific) random access information corresponding to the DU, paging configuration information corresponding to the DU, neighboring cell information corresponding to the DU, cell selection configuration information corresponding to the DU, broadcast message transmission configuration information corresponding to the DU, and radio resource configuration information corresponding to the DU.

It should be noted that the system information of the DU is system information in effect of the DU, the SSB information is SSB configuration information being broadcast by the DU, and the general random access information is information that is usable for both the IAB node and UE; and the cell corresponding to the DU can be understood as a cell provided by the DU.

Optionally, in this embodiment of this application, the broadcast message transmission configuration information corresponding to the DU may include at least one of the following: a period, a list of messages being broadcast, a list of messages based on a migration request message, a system message request configuration, and the like.

Optionally, in this embodiment of this application, the SSB information may include at least one of the following: a time offset, a period, the number of SSBs (that is, value L), an SSB transmit power, an occupied frequency, and the like.

Optionally, in this embodiment of this application, the capability information (Capability information) of the DU includes at least one of the following: scheduling/transmission/reception processing latency of the DU, radio frequency information of the DU, band and carrier supported by the DU, dynamic power adjustment range of the DU, indication information whether the DU supports dual connectivity, indication information whether the DU supports EN-DC (EN stands for EUTRA-NR), multiplexing pattern supported by the DU, subcarrier spacing (SubCarrier Spacing, SCS) information supported by an antenna configuration corresponding to the DU, scheduling pattern supported by the DU, discontinuous reception (Discontinuous Reception, DRX) function information of the DU, preemptive (pre-emptive) buffer status report (Buffer Status Report, BSR) function information corresponding to the DU, downlink hop by hop flow control (DL hop by hop flow control) function information of the DU, radio resource control (Radio Resource Control, RRC) inactive (inactive) state function information corresponding to the DU, RRC idle (idle) state function information corresponding to the DU, traffic class information supported by the DU, and multiple input multiple output (Multiple Input Multiple Output, MIMO) related capability information supported by the DU.

Optionally, in this embodiment of this application, the radio frequency information may include at least one of the following: a maximum transmit power or a minimum transmit power.

Optionally, in this embodiment of this application, the multiplexing pattern may include at least one of the following: across-hop (across-hop) time division multiplexing (Time Division Multiplexing, TDM), frequency division multiplexing (Frequency Division Multiplexing, FDM), space division multiplexing (Space Division Multiplexing, SDM), and full duplexing (full duplexing).

Optionally, in this embodiment of this application, the antenna configuration may include at least one of the following: radio frequency channels/antennas for separate use by IAB-DU and IAB-MT, and radio frequency channels/antennas for common use by IAB-DU and IAB-MT.

Optionally, in this embodiment of this application, the scheduling pattern may include at least one of the following: type (Type) A and type B.

The migration request message further includes third target information, where the third target information is relevant context information of the IAB node.

The third target information includes at least one of the following: information about a BAP entity (entity) corresponding to the IAB node, configuration information of a backhaul (backhaul, BH) radio link control (Radio Link Control, RLC) channel (channel) from the IAB node to a parent IAB node or a child IAB node, routing (route/path) configuration information of the IAB node, local offloading configuration information of the IAB node, bearer (bearer) mapping configuration information of the IAB node, congestion status information of a route (route) or BH RLC channel, measurement configuration information of the IAB node for an NR cell or LTE cell, and internet protocol (Internet Protocol, IP) address information corresponding to the IAB node.

Optionally, in this embodiment of this application, the information about the BAP entity may include at least one of the following: BAP address information and BAP address information of the parent/child IAB node.

Optionally, in this embodiment of this application, the migration request message further includes at least one of the following: capability information of the MT of the IAB node (that is, IAB-MT specific capability information) and type information of the MT, where the capability information is used to indicate a UE function supported by the MT, and the type information of the MT is used to indicate a type of the MT.

Optionally, in this embodiment of this application, the capability information may specifically be a minimum function set indication of the IAB-MT, where the minimum function set indication is used to indicate basic UE functions supported by the IAB-MT.

Optionally, in this embodiment of this application, the IP address information includes at least one of the following: an IP address of the IAB-DU and an IP address of the IAB-MT.

Optionally, in this embodiment of this application, the migration request message further includes second target information, where the second target information is context information of the MT of the IAB node.

Optionally, in this embodiment of this application, the migration response message further includes second configuration information, where the second configuration information is information for network migration configured by the target CU for the MT.

Optionally, in this embodiment of this application, the second configuration information includes at least one of the following: signaling radio bearer (Signaling Radio Bearer, SRB) information, data radio bearer (Data Radio Bearer, DRB) information, serving cell information, power control information, measurement report information, Uu cell configuration information of the DU, time-frequency resource configuration information, and routing information.

The migration response message further includes at least one of the following: backhaul adaptation protocol (Backhaul Adaptation Protocol, BAP) entity configuration information and target routing configuration information that are configured by the target CU for the IAB node, where the target routing configuration information is used to indicate a data forwarding routing relationship of the IAB node in a network controlled by the target CU.

Step 202. The target CU receives the migration request message sent by the source CU.

Step 203. The target CU sends a migration response message to the source CU according to the migration request message.

In this embodiment of this application, the migration response message includes first configuration information, where the first configuration information is information for network migration configured by the target CU for the DU.

In this embodiment of this application, the target CU may complete, based on the received context information of the DU of the IAB node, pre-configuration for the DU in a target network (for example, including a target CU-control plane (Control Plane, CP), a target CU-user plane (User Plane, UP), and a target parent IAB-DU node).

Optionally, in this embodiment of this application, the target CU may establish a relevant pre-configuration for an F1 channel where the DU is connected to the migrating IAB-DU in the target network, so as to perform network migration configuration for the DU.

Optionally, in this embodiment of this application, after completing the configuration for the DU, the target CU may generate a migration response message regarding the IAB node, and send the migration response message to the source CU.

In this embodiment of this application, the target CU may decide whether to change the configuration for the migrating IAB-DU node, and packetize the configuration information of the migrating IAB-DU node into the migration response (Migration Response) message.

Step 204. The source CU receives the migration response message sent by the target CU.

Step 205. The source CU sends first configuration information to the IAB node.

In this embodiment of this application, the first configuration information is for use by the IAB node to implement the migration procedure of the DU.

Step 206. The IAB node receives the first configuration information sent by the source CU.

Step 207. The IAB node implements the migration procedure of the DU according to the first configuration information.

In this embodiment of this application, the DU in the IAB node (which may be referred to as IAB-DU) may implement a network migration procedure (that is, a procedure of migrating from a network controlled by the source CU to a network controlled by the target CU) according to the received first configuration information, and send a reconfiguration complete message to the target CU after completing the network migration.

In the network migration method provided in this embodiment of this application, the source CU can send the context information of the DU of the migrating IAB node to the target CU, so that the target CU can send the first configuration information (that is, the information for network migration configured by the target CU for the DU) to the source CU according to the context information of the DU; and the source CU sends the first configuration information to the IAB node, so that the IAB node implements the migration procedure of the DU according to the first configuration information. In this way, the migrating IAB-DU can migrate from a source network to a target network.

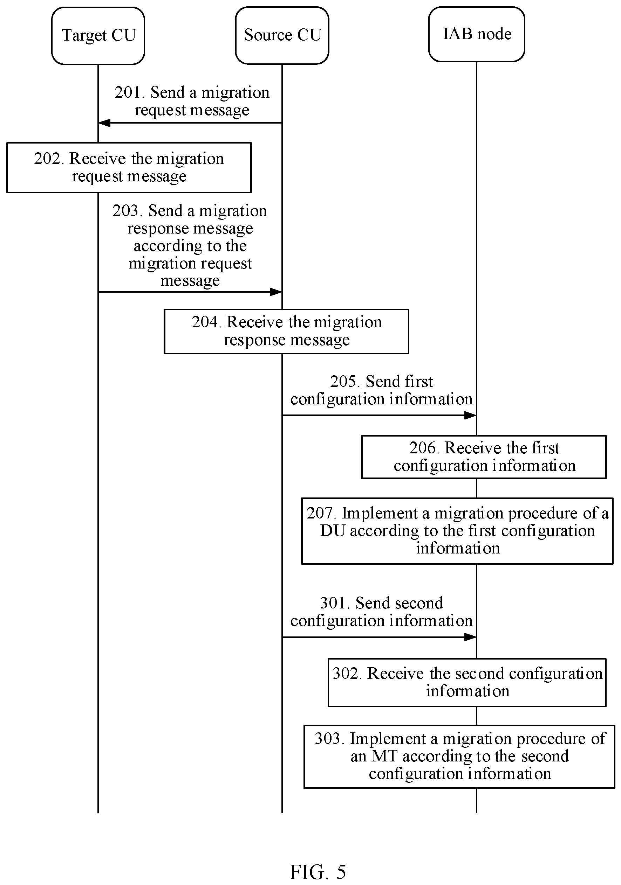

Optionally, in this embodiment of this application, with reference to FIG. 4, as shown in FIG. 5, after the foregoing step 204, the network migration method provided in this embodiment of this application further includes the following step 301 to step 303.

Step 301. The source CU sends second configuration information to the IAB node.

In this embodiment of this application, the second configuration information is information for network migration configured by the target CU for the MT, and the second configuration information is for use by the IAB node to implement the migration procedure of the MT.

Step 302. The IAB node receives the second configuration information sent by the source CU.

Step 303. The IAB node implements a migration procedure of the MT according to the second configuration information.

It should be noted that there is no limitation on the execution sequence of the foregoing steps 301 to 303 and the foregoing steps 205 to 207. In one implementation (the implementation shown in FIG. 5), steps 205 to 207 may be executed before steps 301 to 303; or in another implementation, steps 301 to 303 may be executed before steps 205 to 207; or in still another implementation, steps 205 to 207 may be executed at the same time as steps 301 to 303.

In this embodiment of this application, the source CU can send the context information of the MT of the migrating IAB node to the target CU, so that the target CU can send the second configuration information (that is, the information for network migration configured by the target CU for the MT) to the source CU according to the context information of the MT; and the source CU sends the second configuration information to the IAB node, so that the IAB node implements a migration procedure of the MT according to the second configuration information. In this way, the migrating IAB-MT can migrate from a source network to a target network.

The migration procedure of the migrating IAB node from a source CU network to a target CU network according to the embodiments of this application is described through specific embodiments (that is, the following steps 1 to 11).

Step 1. A source CU sends a migration request of a migrating IAB node to a target CU. The migration request message may include context (CONTEXT) information of an IAB-MT of the IAB node and context (CONTEXT) information of an IAB-DU of the IAB node.

Step 2. The target CU completes pre-configuration for the IAB-MT in a target network (including a target CU-CP, a target CU-UP, and a target parent IAB node) based on the received context information of the IAB-MT of the IAB node, for example, including configuration of radio bearer (for example, SRB and DRB) information and configuration of BAP entity (BAP entity).

Step 3. The target CU completes pre-configuration for the IAB-DU in the target network (including a target CU-CP, a target CU-UP, and a target parent IAB-DU node) based on the received context information of the IAB-DU of the IAB node, for example, including pre-configuration associated with establishment of an F1 channel connected to the migrating IAB-DU on the target network.

Step 4. The target CU performs routing pre-configuration on the IAB-MT and IAB-DU of the migrating IAB node on the target network, where the routing pre-configuration is to establish a data forwarding routing relationship on the target network for the migrating IAB node.

Step 5. After completing the foregoing steps 2, 3, and 4, the target CU generates a migration response message regarding the migrating IAB node, and sends the migration response message to the source CU.

The migration response message includes the pre-configuration information provided by the target CU for the IAB-MT and IAB-DU of the migrating IAB node. The pre-configuration information provided by the target CU for the migrating IAB-MT includes conventional configuration information (for example, SRB, DRB, serving cell, power control, and measurement report), and may also include routing BAP entity configuration information and routing configuration information. The pre-configuration information provided by the target CU for the migrating IAB-MT includes Uu cell configuration information of the IAB-DU, usable time-frequency resource configuration information, and routing information.

Step 6. After receiving the pre-configuration information provided by the target CU for the IAB-DU of the migrating IAB node, the source CU sends the pre-configuration information to the migrating IAB-DU, and the migrating IAB-DU completes the pre-configuration according to the received pre-configuration message.

Step 7. After successfully sending the pre-configuration information of the IAB-DU of the migrating IAB node, the source CU sends the pre-configuration information of the IAB-MT of the migrating IAB node provided by the target CU to the IAB-MT, and the IAB-MT completes the pre-configuration according to the received pre-configuration information.

Step 8. The IAB-MT of the migrating IAB node initiates a random access procedure according to the pre-configuration to establish a wireless connection with the target parent IAB node.

Step 9. The IAB-MT of the migrating IAB node sends a reconfiguration complete message to the target CU.

Step 10. The IAB-DU of the migrating IAB node sends a reconfiguration complete message to the target CU.

Step 11. The target CU node notifies the source IAB node that the migration is successfully completed, and the source IAB node starts a signaling procedure regarding context deletion information of the migrating IAB node.

In this embodiment of this application, the source CU can send the context information of the DU of the migrating IAB node and the context information of the MT of the migrating IAB node to the target CU, so that the target CU can send configuration information (that is, the first configuration information) of the DU and configuration information of the MT (that is, the second configuration information) to the source CU according to the context information of the DU and the context information of the MT; and the source CU sends the configuration information of the DU and the configuration information of the MT to the IAB node, so that the IAB node implements the migration procedure of the DU based on the configuration information of the DU and the migration procedure of the MT based on the configuration information of the MT. In this way, the migrating IAB node (that is, the IAB-DU and the IAB-MT) can migrate from a source network to a target network.

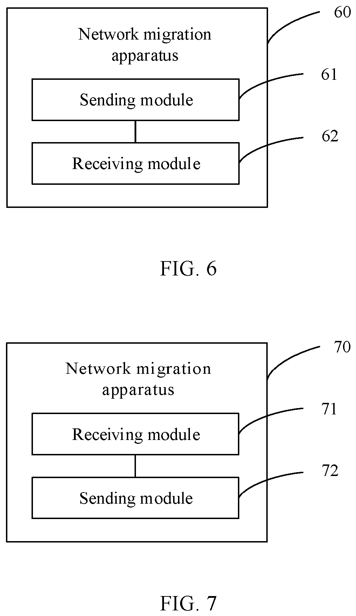

FIG. 6 is a possible schematic structural diagram of a network migration apparatus according to an embodiment of this application. As shown in FIG. 6, the network migration apparatus 60 provided in this embodiment of this application may include a sending module 61 and a receiving module 62.

The sending module 61 is configured to send a migration request message to a target CU, where the migration request message includes first target information, and the first target information is context information of a DU of a migrating IAB node. The receiving module 62 is configured to receive a migration response message sent by the target CU, where the migration response message includes first configuration information, and the first configuration information is information for network migration configured by the target CU for the DU. The sending module 61 is further configured to send the first configuration information to the IAB node, where the first configuration information is for use by the IAB node to implement a migration procedure of the DU.

In a possible implementation, the migration request message further includes second target information, and the second target information is context information of an MT of the IAB node; and the migration response message further includes second configuration information, where the second configuration information is information for network migration configured by the target CU for the MT. The sending module 61 is further configured to send the second configuration information to the IAB node, where the second configuration information is for use by the IAB node to implement a migration procedure of the MT.

In a possible implementation, the second configuration information includes at least one of the following: SRB information, DRB information, serving cell information, power control information, measurement report information, Uu cell configuration information of the DU, time-frequency resource configuration information, and routing information.

The migration response message further includes at least one of the following: BAP entity configuration information and target routing configuration information that are configured by the target CU for the IAB node, where the target routing configuration information is used to indicate a data forwarding routing relationship of the IAB node in a network controlled by the target CU.

In a possible implementation, the first target information includes at least one of the following: system information of the DU, SSB information of the DU, PCI information of the DU, TAC information of the DU, RAN-based RANAC information of the DU, uplink and downlink information of the DU, capability information of the DU, uplink and downlink load of the DU, power distribution information between the DU and an MT of the IAB node, guard symbol information corresponding to the DU, and interference information of a backhaul link corresponding to the DU.

In a possible implementation, the system information of the DU is any one of the following: MIB information, target SIB information, and other SIB information, where the other SIB information is SIB information other than the target SIB information. The system information of the DU includes at least one of the following: PLMN information of a cell corresponding to the DU, BWP information corresponding to the DU, carrier information corresponding to the DU, and slice information corresponding to the DU, general random access information corresponding to the DU, IAB-specific random access information corresponding to the DU, paging configuration information corresponding to the DU, neighboring cell information corresponding to the DU, cell selection configuration information corresponding to the DU, broadcast message transmission configuration information corresponding to the DU, and radio resource configuration information corresponding to the DU.

In a possible implementation, the capability information of the DU includes at least one of the following: scheduling/transmission/reception processing latency of the DU, radio frequency information of the DU, band and carrier supported by the DU, dynamic power adjustment range of the DU, indication information whether the DU supports dual connectivity, indication information whether the DU supports EN-DC, multiplexing pattern supported by the DU, SCS information supported by an antenna configuration corresponding to the DU, scheduling pattern supported by the DU, DRX function information of the DU, preemptive BSR function information corresponding to the DU, downlink hop by hop flow control function information of the DU, RRC inactive state function information corresponding to the DU, RRC idle state function information corresponding to the DU, traffic class information supported by the DU, and MIMO related capability information supported by the DU.

The migration request message further includes third target information, and the third target information is relevant context information of the IAB node. The third target information includes at least one of the following: information about a BAP entity corresponding to the IAB node, configuration information of a BH RLC channel from the IAB node to a parent IAB node or a child IAB node, routing configuration information of the IAB node, local offloading configuration information of the IAB node, bearer mapping configuration information of the IAB node, congestion status information of a route or BH RLC channel, measurement configuration information of the IAB node for an NR cell or LTE cell, and IP address information corresponding to the IAB node.

In a possible implementation, the migration request message further includes at least one of the following: capability information of an MT of the IAB node and type information of the MT, where the capability information is used to indicate a user equipment UE function supported by the MT.

The network migration apparatus provided in this embodiment of this application can implement all processes implemented by the source CU in the foregoing method embodiment. To avoid repetition, details are not described herein again.

In the network migration apparatus provided in this embodiment of this application, the source CU can send the context information of the DU of the migrating IAB node to the target CU, so that the target CU can send the first configuration information (that is, the information for network migration configured by the target CU for the DU) to the source CU according to the context information of the DU; and the source CU sends the first configuration information to the IAB node, so that the IAB node implements the migration procedure of the DU according to the first configuration information. In this way, the migrating IAB-DU can migrate from a source network to a target network.

The network migration apparatus in this embodiment of this application may be an apparatus, or may be a component, an integrated circuit, or a chip in the source CU.

FIG. 7 is a possible schematic structural diagram of a network migration apparatus according to an embodiment of this application. As shown in FIG. 7, the network migration apparatus 70 provided in this embodiment of this application may include a receiving module 71 and a sending module 72.

The receiving module 71 is configured to receive a migration request message sent by a source CU, where the migration request message includes first target information, and the first target information is context information of a DU of a migrating IAB node. The sending module 72 is configured to send a migration response message to the source CU according to the migration request message, where the migration response message includes first configuration information, and the first configuration information is information for network migration configured by a target CU for the DU.

In a possible implementation, the migration request message further includes second target information, and the second target information is context information of an MT of the IAB node. The migration response message further includes second configuration information, and the second configuration information is information for network migration configured by the target CU for the MT.

In a possible implementation, the second configuration information includes at least one of the following: SRB information, DRB information, serving cell information, power control information, measurement report information, Uu cell configuration information of the DU, time-frequency resource configuration information, and routing information.

The migration response message further includes at least one of the following: BAP entity configuration information and target routing configuration information that are configured by the target CU for the IAB node, where the target routing configuration information is used to indicate a data forwarding routing relationship of the IAB node in a network controlled by the target CU.

In a possible implementation, the first target information includes at least one of the following: system information of the DU, SSB information of the DU, PCI information of the DU, TAC information of the DU, RAN-based RANAC information of the DU, uplink and downlink information of the DU, capability information of the DU, uplink and downlink load of the DU, power distribution information between the DU and an MT of the IAB node, guard symbol information corresponding to the DU, and interference information of a backhaul link corresponding to the DU.

In a possible implementation, the system information of the DU is any one of the following: MIB information, target SIB information, and other SIB information, where the other SIB information is SIB information other than the target SIB information. The system information of the DU includes at least one of the following: PLMN information of a cell corresponding to the DU, BWP information corresponding to the DU, carrier information corresponding to the DU, and slice information corresponding to the DU, general random access information corresponding to the DU, IAB-specific random access information corresponding to the DU, paging configuration information corresponding to the DU, neighboring cell information corresponding to the DU, cell selection configuration information corresponding to the DU, broadcast message transmission configuration information corresponding to the DU, and radio resource configuration information corresponding to the DU.

In a possible implementation, the capability information of the DU includes at least one of the following: scheduling/transmission/reception processing latency of the DU, radio frequency information of the DU, band and carrier supported by the DU, dynamic power adjustment range of the DU, indication information whether the DU supports dual connectivity, indication information whether the DU supports EN-DC, multiplexing pattern supported by the DU, SCS information supported by an antenna configuration corresponding to the DU, scheduling pattern supported by the DU, DRX function information of the DU, preemptive BSR function information corresponding to the DU, downlink hop by hop flow control function information of the DU, RRC inactive state function information corresponding to the DU, RRC idle state function information corresponding to the DU, traffic class information supported by the DU, and MIMO related capability information supported by the DU.

The migration request message further includes third target information, and the third target information is relevant context information of the IAB node. The third target information includes at least one of the following: information about a BAP entity corresponding to the IAB node, configuration information of a BH RLC channel from the IAB node to a parent IAB node or a child IAB node, routing configuration information of the IAB node, local offloading configuration information of the IAB node, bearer mapping configuration information of the IAB node, congestion status information of a route or BH RLC channel, measurement configuration information of the IAB node for an NR cell or LTE cell, and IP address information corresponding to the IAB node.

In a possible implementation, the migration request message further includes at least one of the following: capability information of an MT of the IAB node and type information of the MT, where the capability information is used to indicate a user equipment UE function supported by the MT.

The network migration apparatus provided in this embodiment of this application can implement all processes implemented by the target CU in the foregoing method embodiment. To avoid repetition, details are not described herein again.

In the network migration apparatus provided in this embodiment of this application, the target CU can send the first configuration information (that is, the information for network migration configured by the target CU for the DU) to the source CU according to the context information of the DU of the migrating IAB node sent by the source CU, and the source CU sends the first configuration information to the IAB node, so that the IAB node implements the migration procedure of the DU according to the first configuration information. In this way, the migrating IAB-DU can migrate from a source network to a target network.

The network migration apparatus in this embodiment of this application may be an apparatus, or may be a component, an integrated circuit, or a chip in the target CU.

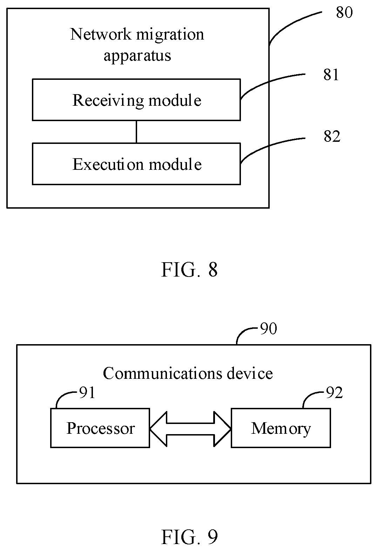

FIG. 8 is a possible schematic structural diagram of a network migration apparatus according to an embodiment of this application. As shown in FIG. 8, the network migration apparatus 80 provided in this embodiment of this application may include a receiving module 81 and an execution module 82.

The receiving module 81 is configured to receive first configuration information sent by a source CU, where the first configuration information is information for network migration configured by a target CU for a DU of an IAB node. The execution module 82 is configured to implement a migration procedure of the DU according to the first configuration information.

In a possible implementation, the receiving module 81 is further configured to receive second configuration information sent by the source CU, where the second configuration information is information configured by the target CU to an MT for network migration. The execution module 82 is further configured to implement a migration procedure of the MT according to the second configuration information.

In a possible implementation, the second configuration information includes at least one of the following: SRB information, DRB information, serving cell information, power control information, measurement report information, Uu cell configuration information of the DU, time-frequency resource configuration information, and routing information.

The network migration apparatus provided in this embodiment of this application can implement all processes implemented by the IAB node in the foregoing method embodiment. To avoid repetition, details are not described herein again.

In the network migration apparatus provided in this embodiment of this application, the IAB node can implement the migration procedure of the DU according to the first configuration information (that is, the information for network migration configured by the target CU for the DU) sent by the source CU. In this way, the migrating IAB-DU can migrate from a source network to a target network.

The network migration apparatus in this embodiment of this application may be an apparatus, or may be a component, an integrated circuit, or a chip in the IAB node.

Optionally, as shown in FIG. 9, an embodiment of this application further provides a communications device 90, including a processor 91, a memory 92, and a program or instructions stored in the memory 92 and capable of running on the processor 91. For example, if the communications device 90 is a source CU, when the program or instructions are executed by the processor 91, the processes implemented by the source CU in the foregoing method embodiment are implemented, with the same technical effects achieved. To avoid repetition, details are not further described herein. If the communications device 90 is a target CU, when the program or instructions are executed by the processor 91, the processes implemented by the target CU in the foregoing method embodiment are implemented, with the same beneficial effects achieved. To avoid repetition, details are not described herein again. If the communications device 90 is an IAB node, when the program or instructions are executed by the processor 91, the processes implemented by the IAB node in the foregoing method embodiment are implemented, with the same beneficial effects achieved. To avoid repetition, details are not described herein again.

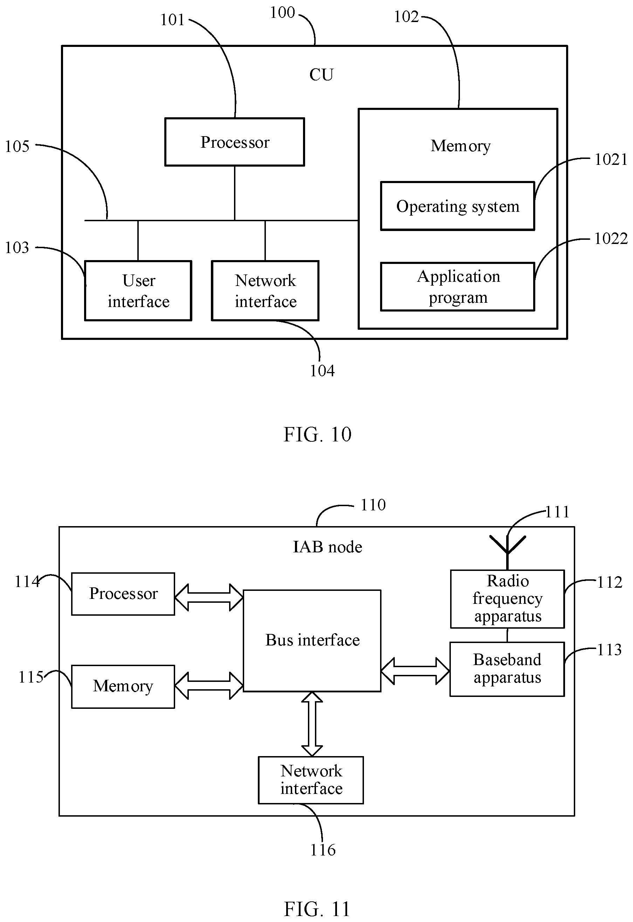

An embodiment of this application further provides a CU. FIG. 10 is a schematic diagram of a hardware structure of a CU for implementing the embodiments of this application.

It should be noted that the hardware structure of the CU shown in FIG. 10 may be the hardware structure of the source CU or the hardware structure of the target CU in the foregoing embodiment.

The CU 100 includes but is not limited to at least one processor 101, a memory 102, a user interface 103, and at least one network interface 104. Components of the CU 100 are coupled together through a bus system 105.

It should be noted that a person skilled in the art can understand that the structure of the CU 100 shown in FIG. 10 does not constitute a limitation on the CU. The CU may include more or fewer components than shown in FIG. 10, or some components may be combined, or the components may be disposed in different manners.

In this embodiment of this application, the at least one network interface 104 is configured to: send a migration request message to a target CU, where the migration request message includes first target information, and the first target information is context information of a DU of a migrating IAB node; receive a migration response message sent by the target CU, where the migration response message includes first configuration information, and the first configuration information is information for network migration configured by the target CU for the DU; and send the first configuration information to the IAB node, where the first configuration information is for use by the IAB node to implement a migration procedure of the DU.

Alternatively, the at least one network interface 104 is configured to: receive a migration request message sent by a source CU, where the migration request message includes first target information, and the first target information is context information of a DU of a migrating IAB node; and send a migration response message to the source CU according to the migration request message, where the migration response message includes first configuration information, and the first configuration information is information for network migration configured by the target CU for the DU.

In this embodiment of this application, the source CU can send the context information of the DU of the migrating IAB node to the target CU, so that the target CU can send the first configuration information (that is, the information for network migration configured by the target CU for the DU) to the source CU according to the context information of the DU; and the source CU sends the first configuration information to the IAB node, so that the IAB node implements the migration procedure of the DU according to the first configuration information. In this way, the migrating IAB-DU can migrate from a source network to a target network.

Optionally, the at least one network interface 104 is further configured to send second configuration information to the IAB node, where the second configuration information is for use by the IAB node to implement a migration procedure of an MT of the IAB node.

It can be understood that the bus system 105 is used to implement a connection and communication between these components. In addition to a data bus, the bus system 105 further includes a power bus, a control bus, and a status signal bus. However, for clarity of description, various buses are marked as the bus system 105 in FIG. 10.

The user interface 103 may include a display, a keyboard, a pointing device (for example, a mouse, a trackball, a touch panel, or a touchscreen), or the like.

It can be understood that the memory 102 in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not restrictive description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDRSDRAM), an enhanced synchronous dynamic random access memory (enhanced SDRAM, ESDRAM), a synchronous link dynamic random access memory (synch link DRAM, SLDRAM), and a direct rambus random access memory (direct rambus RAM, DRRAM). The memory 102 described in this embodiment of this application is intended to include but not be limited to these and any other suitable types of memories.

In some implementations, the memory 102 stores the following elements: executable modules or data structures, or a subset thereof, or an extended set thereof: an operating system 1021 and an application program 1022.

The operating system 1021 includes various system programs, such as a framework layer, a core library layer, and a driver layer, for implementing various basic services and processing hardware-based tasks. The application program 1022 includes various application programs, such as a media player and a browser, for implementing various application services. A program for implementing the method in this embodiment of this application may be included in the application program 1022.

In this embodiment of this application, the CU 100 may further include a program or instructions stored on the memory 102 and capable of running on the processor 101, where when the program or instructions are executed by the processor 101, the steps of the methods provided in the embodiments of this application are implemented.

The method disclosed in the foregoing embodiments of this application may be applied to the processor 101 or implemented by the processor 101. The processor 101 may be an integrated circuit chip, having a signal processing capability. During implementation, the steps of the foregoing method may be completed by hardware integrated logic circuits in the processor 101 or instructions in the form of software. The foregoing processor 101 may be a general-purpose processor, a digital signal processor (digital signal processor, DSP), an application-specific integrated circuit (application specific integrated circuit, ASIC), a field programmable gate array (field programmable gate array, FPGA) or other programmable logic device, a discrete gate or transistor logic device, or a discrete hardware component. The processor 101 can implement or perform the methods, steps, and logical block diagrams that are disclosed in the embodiments of this application. The general-purpose processor may be a microprocessor, or the processor may also be any conventional processor or the like. The steps of the methods disclosed with reference to the embodiments of this application may be directly implemented by a hardware decoding processor, or may be implemented by a combination of hardware and software modules in a decoding processor. The software module may be located in a computer-readable storage medium that is mature in the art, such as a random access memory, a flash memory, a read-only memory, a programmable read-only memory, or an electrically erasable programmable memory, or a register. The computer-readable storage medium is located in the memory 102, and the processor 101 fetches information in the memory 102, and completes the steps of the foregoing method in combination with its hardware. Specifically, the computer-readable storage medium stores a program or instructions, where when the program or instructions are executed by the processor 101, the steps in the method embodiments of the embodiments of this application are implemented.

It can be understood that the embodiments described in the embodiments of this application may be implemented by hardware, software, firmware, middleware, microcode, or a combination thereof. In implementation by hardware, a processing unit may be implemented in one or more ASICs, a DSP, a digital signal processing device (DSP Device, DSPD), a programmable logic device (programmable logic device, PLD), an FPGA, a general-purpose processor, a controller, a microcontroller, a microprocessor, other electronic units used to implement the functions described in this application, or a combination thereof.

For software implementation, the technologies described in the embodiments of this application may be implemented by modules (for example, processes or functions) that perform the functions described in the embodiments of this application. Software code may be stored in the memory and executed by the processor. The memory may be implemented in or outside the processor.

An embodiment of this application further provides a readable storage medium, where the readable storage medium stores a program or instructions, and when the program or instructions are executed by the processor 101 shown in FIG. 10, the processes of the foregoing method embodiments are implemented, with the same technical effects achieved. To avoid repetition, details are not described herein again. The computer-readable storage medium is, for example, a ROM, a RAM, a magnetic disc, or an optical disk.

An embodiment of this application further provides an IAB node. FIG. 11 is a schematic diagram of a hardware structure of an IAB node for implementing the embodiments of this application.

As shown in FIG. 11, the IAB node 110 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and transmits the received information to the baseband apparatus 113 for processing. In a downlink direction, the baseband apparatus 113 processes to-be-transmitted information, and transmits the information to the radio frequency apparatus 112; and the radio frequency apparatus 112 processes the received information and then transmits the information through the antenna 111.

The band processing apparatus may be located in the baseband apparatus 113. The method performed by the IAB node in the foregoing embodiment may be implemented by the baseband apparatus 113, and the baseband apparatus 113 includes a processor 114 and a memory 115.

The baseband apparatus 113 may include, for example, at least one baseband processing unit, where a plurality of chips are disposed on the baseband processing unit. As shown in FIG. 11, one of the chips, for example, the processor 114, is connected to the memory 115 to invoke the program in the memory 115 so as to execute the operations of the IAB node shown in the foregoing method embodiment.

The baseband apparatus 113 may further include a network interface 116, configured to exchange information with the radio frequency apparatus 112, where the interface is, for example, a common public radio interface (common public radio interface, CPRI).

Specifically, the IAB node in this embodiment of this application further includes a program or instructions stored in the memory 115 and capable of running on the processor 114. The processor 114 invokes the program or instructions in the memory 115 to perform the methods performed by the modules described above, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing method embodiments are implemented, with the same technical effects achieved. To avoid repetition, details are not described herein again.

The processor is the processor in the communications device described in the foregoing embodiment. The readable storage medium includes a computer-readable storage medium such as a ROM, a RAM, a magnetic disc, or an optical disc.

An embodiment of this application further provides a chip, where the chip includes a processor and a communications interface, the communications interface is coupled to the processor, and the processor is configured to run a program or instructions to implement the processes of the foregoing method embodiments, with the same technical effects achieved. To avoid repetition, details are not described herein again.

It should be understood that the chip in the embodiments of this application may also be referred to as a system-level chip, a system chip, a chip system, a system on chip, or the like.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings.
The computer-readable storage medium is, for example, a ROM, a RAM, a magnetic disc, or an optical disk.

An embodiment of this application further provides an IAB node. FIG. 11 is a schematic diagram of a hardware structure of an IAB node for implementing the embodiments of this application.

As shown in FIG. 11, the IAB node 110 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and transmits the received information to the baseband apparatus 113 for processing. In a downlink direction, the baseband apparatus 113 processes to-be-transmitted information, and transmits the information to the radio frequency apparatus 112; and the radio frequency apparatus 112 processes the received information and then transmits the information through the antenna 111.

The band processing apparatus may be located in the baseband apparatus 113. The method performed by the IAB node in the foregoing embodiment may be implemented by the baseband apparatus 113, and the baseband apparatus 113 includes a processor 114 and a memory 115.

The baseband apparatus 113 may include, for example, at least one baseband processing unit, where a plurality of chips are disposed on the baseband processing unit. As shown in FIG. 11, one of the chips, for example, the processor 114, is connected to the memory 115 to invoke the program in the memory 115 so as to execute the operations of the IAB node shown in the foregoing method embodiment.

The baseband apparatus 113 may further include a network interface 116, configured to exchange information with the radio frequency apparatus 112, where the interface is, for example, a common public radio interface (common public radio interface, CPRI).

Specifically, the IAB node in this embodiment of this application further includes a program or instructions stored in the memory 115 and capable of running on the processor 114. The processor 114 invokes the program or instructions in the memory 115 to perform the methods performed by the modules described above, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing method embodiments are implemented, with the same technical effects achieved. To avoid repetition, details are not described herein again.

The processor is the processor in the communications device described in the foregoing embodiment. The readable storage medium includes a computer-readable storage medium such as a ROM, a RAM, a magnetic disc, or an optical disc.

An embodiment of this application further provides a chip, where the chip includes a processor and a communications interface, the communications interface is coupled to the processor, and the processor is configured to run a program or instructions to implement the processes of the foregoing method embodiments, with the same technical effects achieved. To avoid repetition, details are not described herein again.

It should be understood that the chip in the embodiments of this application may also be referred to as a system-level chip, a system chip, a chip system, a system on chip, or the like.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to these specific embodiments. The specific embodiments are merely illustrative rather than restrictive. Inspired by this application, persons of ordinary skill in the art may develop many other manners without departing from the principle of this application and the protection scope of the claims, and all such manners fall within the protection scope of this application.

## Claims

1. A network migration method, wherein the method comprises:
sending (201), by a source centralized unit, CU, a migration request message to a target CU, wherein the migration request message comprises first target information, and the first target information is context information of a distributed unit, DU, of a migrating integrated access backhaul, IAB, node;
receiving (204), by the source CU, a migration response message sent by the target CU, wherein the migration response message comprises first configuration information, and the first configuration information is information for network migration configured by the target CU for the DU; and
sending (205), by the source CU, the first configuration information to the IAB node, wherein the first configuration information is for use by the IAB node to implement a migration procedure of the DU;
**characterized in that**,
the migration request message further comprises third target information, and the third target information is relevant context information of the IAB node; and the third target information comprises at least one of the following: information about a BAP entity corresponding to the IAB node, configuration information of a backhaul BH radio link control RLC channel from the IAB node to a parent IAB node or a child IAB node, routing configuration information of the IAB node, local offloading configuration information of the IAB node, bearer mapping configuration information of the IAB node, congestion status information of a route or BH RLC channel, measurement configuration information of the IAB node for a new radio NR cell or long term evolution LTE cell, and internet protocol IP address information corresponding to the IAB node;
the migration response message further comprises target routing configuration information that is configured by the target CU for the IAB node, and the target routing configuration information is used to indicate a data forwarding routing relationship of the IAB node in a network controlled by the target CU.

2. The method according to claim 1, wherein the migration request message further comprises second target information, and the second target information is context information of a mobile termination MT of the IAB node; and the migration response message further comprises second configuration information, and the second configuration information is information for network migration configured by the target CU for the MT; and
the method further comprises:
sending (301), by the source CU, the second configuration information to the IAB node, wherein the second configuration information is for use by the IAB node to implement a migration procedure of the MT.

3. The method according to claim 2, wherein the second configuration information comprises at least one of the following: signaling radio bearer SRB information, data radio bearer DRB information, serving cell information, power control information, measurement report information, Uu cell configuration information of the DU, time-frequency resource configuration information, and routing information.

4. The method according to claim 1, wherein the first target information comprises at least one of the following: system information of the DU, synchronization signal block SSB information of the DU, physical cell identifier PCI information of the DU, tracking area code TAC information of the DU, radio access network RAN based notification area code RANAC information of the DU, uplink and downlink information of the DU, capability information of the DU, uplink and downlink load of the DU, power distribution information between the DU and an MT of the IAB node, guard symbol information corresponding to the DU, and interference information of a backhaul link corresponding to the DU.

5. The method according to claim 4, wherein the system information of the DU is any one of the following: master system information block MIB information, target system information block SIB information, and other SIB information, wherein the other SIB information is SIB information other than the target SIB information; and
the system information of the DU comprises at least one of the following: public land mobile network PLMN information of a cell corresponding to the DU, bandwidth part BWP configuration information corresponding to the DU, carrier configuration information corresponding to the DU, slice configuration information corresponding to the DU, general random access configuration information corresponding to the DU, IAB-specific random access configuration information corresponding to the DU, paging configuration information corresponding to the DU, neighboring cell information corresponding to the DU, cell selection configuration information corresponding to the DU, broadcast message transmission configuration information corresponding to the DU, and radio resource configuration information corresponding to the DU.

6. The method according to claim 4, wherein the capability information of the DU comprises at least one of the following: scheduling/transmission/reception processing latency of the DU, radio frequency information of the DU, band and carrier supported by the DU, dynamic power adjustment range of the DU, indication information whether the DU supports dual connectivity, indication information whether the DU supports EN-DC, multiplexing pattern supported by the DU, subcarrier spacing SCS information supported by an antenna configuration corresponding to the DU, scheduling pattern supported by the DU, discontinuous reception DRX function information of the DU, preemptive buffer status report BSR function information corresponding to the DU, downlink hop by hop flow control function information of the DU, radio resource control RRC inactive state function information corresponding to the DU, RRC idle state function information corresponding to the DU, traffic class information supported by the DU, and multiple input multiple output MIMO related capability information supported by the DU.

7. A network migration method, wherein the method comprises:
receiving (202), by a target centralized unit, CU, a migration request message sent by a source CU, wherein the migration request message comprises first target information, and the first target information is context information of a distributed unit, DU, of a migrating integrated access backhaul, IAB, node; and
sending (203), by the target CU, a migration response message to the source CU according to the migration request message, wherein the migration response message comprises first configuration information, and the first configuration information is information for network migration configured by the target CU for the DU;
**characterized in that**,
the migration request message further comprises third target information, and the third target information is relevant context information of the IAB node; and the third target information comprises at least one of the following: information about a BAP entity corresponding to the IAB node, configuration information of a backhaul BH radio link control RLC channel from the IAB node to a parent IAB node or a child IAB node, routing configuration information of the IAB node, local offloading configuration information of the IAB node, bearer mapping configuration information of the IAB node, congestion status information of a route or BH RLC channel, measurement configuration information of the IAB node for a new radio NR cell or long term evolution LTE cell, and internet protocol IP address information corresponding to the IAB node;
the migration response message further comprises target routing configuration information that is configured by the target CU for the IAB node, and the target routing configuration information is used to indicate a data forwarding routing relationship of the IAB node in a network controlled by the target CU.

8. The method according to claim 7, wherein the migration request message further comprises second target information, and the second target information is context information of a mobile termination MT of the IAB node; and
the migration response message further comprises second configuration information, and the second configuration information is information for network migration configured by the target CU for the MT.

9. The method according to claim 7, wherein the first target information comprises at least one of the following: system information of the DU, synchronization signal block SSB information of the DU, physical cell identifier PCI information of the DU, tracking area code TAC information of the DU, radio access network RAN based notification area code RANAC information of the DU, uplink and downlink information of the DU, capability information of the DU, uplink and downlink load of the DU, power distribution information between the DU and an MT of the IAB node, guard symbol information corresponding to the DU, and interference information of a backhaul link corresponding to the DU.

10. The method according to claim 9, wherein the system information of the DU is any one of the following: master system information block MIB information, target system information block SIB information, and other SIB information, wherein the other SIB information is SIB information other than the target SIB information; and
the system information of the DU comprises at least one of the following: public land mobile network PLMN information of a cell corresponding to the DU, bandwidth part BWP configuration information corresponding to the DU, carrier configuration information corresponding to the DU, and slice configuration information corresponding to the DU, general random access configuration information corresponding to the DU, paging configuration information corresponding to the DU, neighboring cell information corresponding to the DU, cell selection configuration information corresponding to the DU, broadcast message transmission configuration information corresponding to the DU, and radio resource configuration information corresponding to the DU.

11. The method according to claim 9, wherein the capability information of the DU comprises at least one of the following: scheduling/transmission/reception processing latency of the DU, radio frequency information of the DU, band and carrier supported by the DU, dynamic power adjustment range of the DU, indication information whether the DU supports dual connectivity, indication information whether the DU supports EN-DC, multiplexing pattern supported by the DU, subcarrier spacing SCS information supported by an antenna configuration corresponding to the DU, scheduling pattern supported by the DU, discontinuous reception DRX function information of the DU, preemptive buffer status report BSR function information corresponding to the DU, downlink hop by hop flow control function information of the DU, radio resource control RRC inactive state function information corresponding to the DU, RRC idle state function information corresponding to the DU, traffic class information supported by the DU, and multiple input multiple output MIMO related capability information supported by the DU.

12. A network migration method, comprising:
receiving (206), by an integrated access backhaul, IAB, node, first configuration information sent by a source centralized unit, CU, wherein the first configuration information is information for network migration configured by a target CU for a distributed unit, DU, of the IAB node; and
implementing (207), by the IAB node, a migration procedure of the DU according to the first configuration information;
wherein the first configuration information is comprised in a migration response message, and the migration response message is sent by the target CU inresponse to a migration request message from the source CU;
**characterized in that**,
the migration request message further comprises third target information, and the third target information is relevant context information of the IAB node; and the third target information comprises at least one of the following: information about a BAP entity corresponding to the IAB node, configuration information of a backhaul BH radio link control RLC channel from the IAB node to a parent IAB node or a child IAB node, routing configuration information of the IAB node, local offloading configuration information of the IAB node, bearer mapping configuration information of the IAB node, congestion status information of a route or BH RLC channel, measurement configuration information of the IAB node for a new radio NR cell or long term evolution LTE cell, and internet protocol IP address information corresponding to the IAB node;
the migration response message further comprises target routing configuration information that is configured by the target CU for the IAB node, and the target routing configuration information is used to indicate a data forwarding routing relationship of the IAB node in a network controlled by the target CU.

13. A centralized unit CU, comprising a processor, a memory, and a program or instructions stored in the memory and capable of running on the processor, wherein when the program or instructions are executed by the processor, the steps of the network migration method according to any one of claims 1 to 6 are implemented.

14. A centralized unit CU, comprising a processor, a memory, and a program or instructions stored in the memory and capable of running on the processor, wherein when the program or instructions are executed by the processor, the steps of the network migration method according to any one of claims 7 to 11 are implemented.

15. A communication system comprising an integrated access backhaul IAB node, a source centralized unit CU, and a target CU comprising a processor, a memory, and a program or instructions stored in the memory and capable of running on the processor, wherein when the program or instructions are executed by the processor, the steps of the network migration method according to claim 12 are implemented.

## Patentansprüche

1. Ein Netzmigrationsverfahren, wobei das Verfahren umfasst:
Senden (201) einer Migrationsanforderungsnachricht durch eine Quell-zentrale Einheit, CU, an eine Ziel-CU, wobei die Migrationsanforderungsnachricht erste Zielinformationen umfasst und die ersten Zielinformationen Kontextinformationen einer verteilten Einheit, DU, eines migrierenden Knotens mit integriertem Zugriff und Backhaul, IAB, sind;
Empfangen (204) einer von der Ziel-CU gesendeten Migrationsantwortnachricht durch die Quell-CU, wobei die Migrationsantwortnachricht erste Konfigurationsinformationen umfasst und die ersten Konfigurationsinformationen Informationen für die Netzmigration sind, die von der Ziel-CU für die DU konfiguriert wurden; und
Senden (205) der ersten Konfigurationsinformationen durch die Quell-CU an den IAB-Knoten, wobei die ersten Konfigurationsinformationen zur Verwendung durch den IAB-Knoten dienen, um ein Migrationsverfahren der DU zu implementieren;
**dadurch gekennzeichnet, dass**, die Migrationsanforderungsnachricht ferner
dritte Zielinformationen umfasst, und die dritten Zielinformationen relevante Kontextinformationen des IAB-Knotens sind; und die dritten Zielinformationen mindestens eines der Folgenden umfassen: Informationen über eine dem IAB-Knoten entsprechende BAP-Entität, Konfigurationsinformationen eines Backhaul-(BH)-Funkverbindungssteuerungs-(RLC)-Kanals von dem IAB- Knoten zu einem übergeordneten IAB-Knoten oder einem untergeordneten IAB-Knoten, Routing-Konfigurationsinformationen des IAB-Knotens, lokale Offloading-Konfigurationsinformationen des IAB-Knotens, Trägerzuordnungs-Konfigurationsinformationen des IAB-Knotens, Überlastungsstatusinformationen einer Route oder eines BH-RLC-Kanals, Messkonfigurationsinformationen des IAB-Knotens für eine New-Radio-(NR)-Zelle oder eine Long-Term-Evolution-(LTE)-Zelle und Internetprotokoll-(IP)-Adressinformationen, die dem IAB-Knoten entsprechen;
die Migrationsantwortnachricht ferner Ziel-Routing-Konfigurationsinformationen umfasst, die von der Ziel-CU für den IAB-Knoten konfiguriert werden, und die Ziel Routing-Konfigurationsinformationen verwendet werden, um eine Datenweiterleitungs-Routing-Beziehung des IAB-Knotens in einem von der Ziel-CU gesteuerten Netzwerk anzugeben.

2. Das Verfahren nach Anspruch 1, wobei die Migrationsanforderungsnachricht ferner umfasst zweite Zielinformationen, und die zweiten Zielinformationen sind Kontextinformationen eines Mobilabschlusses (MT) des IAB-Knotens; und die Migrationsantwortnachricht umfasst ferner zweite Konfigurationsinformationen, und die zweiten Konfigurationsinformationen sind Informationen für die von der Ziel-CU für den MT konfigurierte Netzmigration; und
das Verfahren umfasst ferner:
Senden (301) der zweiten Konfigurationsinformationen durch die Quell-CU an den IAB-Knoten, wobei die zweiten Konfigurationsinformationen zur Verwendung durch den IAB-Knoten zur Durchführung einer Migrationsprozedur des MT bestimmt sind.

3. Das Verfahren nach Anspruch 2, wobei die zweiten Konfigurationsinformationen mindestens eines von Folgendem umfassen: Informationen zu einem Signalisierungsfunkträger (SRB), Informationen zu einem Datenfunkträger (DRB), Informationen zu einer bedienenden Zelle, Leistungssteuerungsinformationen, Messberichtsinformationen, Uu-Zellenkonfigurationsinformationen der DU, Zeit-Frequenz-Ressourcenkonfigurationsinformationen und Routing-Informationen.

4. Das Verfahren nach Anspruch 1, wobei die ersten Zielinformationen mindestens eines von Folgendem umfassen: Systeminformationen der DU, Informationen zum Synchronisationssignalblock (SSB) der DU, Informationen zur physikalischen Zellkennung (PCI) der DU, Informationen zum Tracking-Area-Code (TAC) der DU, Informationen zum auf dem Funkzugangsnetz (RAN) basierenden Benachrichtigungsbereichscode (RANAC) der DU, Uplink- und Downlink-Informationen der DU, Fähigkeitsinformationen der DU, Uplink- und Downlink-Last der DU, Leistungsverteilungsinformationen zwischen der DU und einem MT des IAB-Knotens, der DU entsprechende Schutzsymbolinformationen und Interferenzinformationen einer der DU entsprechenden Backhaul-Verbindung.

5. Das Verfahren nach Anspruch 4, wobei die Systeminformationen der DU eines von Folgendem sind: Informationen zu einem Master-Systeminformationsblock (MIB), Ziel-Systeminformationsblock-Informationen (SIB-Informationen) und andere SIB-Informationen, wobei die anderen SIB-Informationen SIB-Informationen sind, die von den Ziel-SIB-Informationen verschieden sind; und
die Systeminformationen der DU umfassen mindestens eines von Folgendem: Informationen zu einem öffentlichen Landmobilfunknetz (PLMN) einer der DU entsprechenden Zelle, Konfigurationsinformationen zu einem der DU entsprechenden Bandbreitenteil (BWP), Trägerkonfigurationsinformationen entsprechend der verteilten Einheit (DU), Slice-Konfigurations-informationen entsprechend der DU, allgemeine Direktzugriffskonfigurations- informationen entsprechend der DU, IAB-spezifische Direktzugriffs-konfigurationsinformationen entsprechend der DU, Paging-Konfigurations-informationen entsprechend der DU, Nachbarzelleninformationen entsprechend der DU, Zellenauswahlkonfigurationsinformationen entsprechend der DU, Rundfunknachrichtenübertragungskonfigurations-informationen entsprechend der DU und Funkressourcenkonfigurations-informationen entsprechend der DU.

6. Das Verfahren nach Anspruch 4, wobei die Fähigkeitsinformationen der DU mindestens eines der folgenden umfassen: Planungs-/Übertragungs-/Empfangsverarbeitungslatenz der DU, Funkfrequenzinformationen der DU, Band und Träger, die von der DU unterstützt werden, dynamischer Leistungsanpassungsbereich der DU, Angabe-informationen darüber, ob die DU Dual Connectivity unterstützt, Angabeinformationen darüber, ob die DU E-UTRA-NR-Dual-Connectivity (EN-DC) unterstützt, Multiplexing-Muster, die von der DU unterstützt werden, Informationen zum Unterträgerabstand (SCS), die von einer Antennen-konfiguration entsprechend der DU unterstützt werden, Planungsmuster, die von der DU unterstützt werden, Funktionsinformationen zum diskontinuierlichen Empfang (DRX) der DU, präemptive Funktionsinformationen zum Pufferstatusbericht (BSR) entsprechend der DU, Funktionsinformationen zur Hop-by-Hop-Flusssteuerung auf der Abwärtsstrecke der DU, Funk-ressourcensteuerungs-(RRC)-Inaktivzustands-Funktionsinformationen entsprechend der DU, RRC-Ruhezustands-Funktionsinformationen entsprechend der DU, Verkehrsklassen-informationen, die von der DU unterstützt werden, und Fähigkeitsinformationen im Zusammenhang mit Mehrantennenübertragung (MIMO), die von der DU unterstützt werden.

7. Ein Netzmigrationsverfahren, wobei das Verfahren umfasst:
Empfangen (202), durch eine Ziel-CU, einer Migrationsanforderungs-nachricht, die von einer Quell-CU gesendet wird, wobei die Migrationsanforderungsnachricht erste Zielinformationen umfasst und die ersten Zielinformationen Kontextinformationen einer verteilten Einheit (DU) eines migrierenden Knotens für integrierten Zugriff und Backhaul (IAB) sind;
und
Senden (203), durch die Ziel-CU, einer Migrationsantwortnachricht an die Quell-CU gemäß der Migrationsanforderungsnachricht, wobei die Migration Antwortnachricht umfasst erste Konfigurationsinformationen, und die ersten Konfigurationsinformationen sind Informationen für die Netzmigration, die von der Ziel-CU für die DU konfiguriert wurden;
**dadurch gekennzeichnet, dass**,
die Migrationsanforderungsnachricht ferner dritte Zielinformationen umfasst, und die dritten Zielinformationen relevante Kontextinformationen des IAB-Knotens sind; und die dritten Zielinformationen mindestens eines der Folgenden umfassen: Informationen über eine BAP-Entität, die dem IAB-Knoten entspricht, Konfigurationsinformationen eines Backhaul-(BH)-Funkverbindungssteuerungs-(RLC)-Kanals vom IAB-Knoten zu einem übergeordneten IAB-Knoten oder einem untergeordneten IAB-Knoten, Routing-Konfigurationsinformationen des IAB-Knotens, lokale Offloading-Konfigurationsinformationen des IAB-Knotens, Konfigurationsinformationen zur Trägerzuordnung des IAB-Knotens, Überlaststatusinformationen einer Route oder eines BH-RLC-Kanals, Messkonfigurationsinformationen des IAB-Knotens für eine New-Radio-(NR)-Zelle oder eine Long-Term-Evolution-(LTE)-Zelle und Internetprotokoll-(IP)-Adressinformationen, die dem IAB-Knoten entsprechen;
die Migrationsantwortnachricht umfasst ferner Ziel-Routing-Konfigurationsinformationen, die von der Ziel-CU für den IAB-Knoten konfiguriert werden, und die Ziel-Routing-Konfigurationsinformationen werden verwendet, um eine Datenweiterleitungs-Routing-Beziehung des IAB-Knotens in einem Netzwerk anzugeben, das von der Ziel-CU gesteuert wird.

8. Das Verfahren nach Anspruch 7, wobei die Migrationsanforderungsnachricht ferner zweite Zielinformationen umfasst und die zweiten Zielinformationen Kontextinformationen eines Mobilabschlusses (MT) des IAB-Knotens sind; und
die Migrationsantwortnachricht umfasst ferner zweite Konfigurationsinformationen, und die zweiten Konfigurationsinformationen sind Informationen für die Netzmigration, die von der Ziel-CU für den MT konfiguriert wurden.

9. Das Verfahren nach Anspruch 7, wobei die ersten Zielinformationen mindestens eines der Folgenden umfassen: Systeminformationen der DU, Informationen zum Synchronisationssignalblock (SSB) der DU, Informationen zur physikalischen Zellkennung (PCI) der verteilten Einheit (DU), Tracking-Area-Code-(TAC)-Informationen der verteilten Einheit (DU), auf dem Funkzugangsnetz (RAN) basierende RAN-Bereichscode-(RANAC)-Informationen der verteilten Einheit (DU), Uplink- und Downlink-Informationen der verteilten Einheit (DU), Fähigkeitsinformationen der verteilten Einheit (DU), Uplink- und Downlink-Last der verteilten Einheit (DU), Leistungsaufteilungsinformationen zwischen der verteilten Einheit (DU) und einem Mobilabschluss (MT) des IAB-Knotens, Schutzsymbolinformationen, die der verteilten Einheit (DU) entsprechen, und Interferenzinformationen einer Backhaul-Verbindung, die der verteilten Einheit (DU) entspricht.

10. Das Verfahren nach Anspruch 9, wobei die Systeminformationen der verteilten Einheit (DU) eine der folgenden sind: Master-Systeminformationsblock-(MIB)-Informationen, Ziel-Systeminformationsblock-(SIB)-Informationen und andere SIB-Informationen, wobei die anderen SIB-Informationen andere SIB-Informationen als die Ziel-SIB-Informationen sind; und
die Systeminformationen der verteilten Einheit (DU) mindestens eines der folgenden umfassen: Informationen über ein öffentliches Landmobilfunknetz (PLMN) einer Zelle, die der verteilten Einheit (DU) entspricht, Bandbreitenteil-(BWP)-Konfigurationsinformationen, die der verteilten Einheit (DU) entsprechen, Trägerkonfigurationsinformationen, die der verteilten Einheit (DU) entsprechen, und Slice-Konfigurationsinformationen, die der verteilten Einheit (DU) entsprechen, allgemeine Direktzugriffs-Konfigurationsinformationen, die der verteilten Einheit (DU) entsprechen, Paging-Konfigurations-informationen, die der verteilten Einheit (DU) entsprechen, Nachbarzelleninformationen, die der verteilten Einheit (DU) entsprechen, Zellenauswahl-Konfigurationsinformationen, die der verteilten Einheit (DU) entsprechen, Rundsendungsnachrichtenübertragungs-Konfigurations-informationen, die der verteilten Einheit (DU) entsprechen, und Funkressourcen-Konfigurationsinformationen, die der verteilten Einheit (DU) entsprechen.

11. Das Verfahren nach Anspruch 9, wobei die Fähigkeitsinformationen der verteilten Einheit (DU) mindestens eines der folgenden umfassen: Planungs-/Übertragungs/Empfangs-Verarbeitungslatenz der verteilten Einheit (DU), Funkfrequenzinformationen der verteilten Einheit (DU), Band und Träger, die von der verteilten Einheit (DU) unterstützt werden, dynamischer Leistungsanpassungsbereich der verteilten Einheit (DU), Angabeinformationen darüber, ob die verteilte Einheit (DU) Dual-Connectivity unterstützt, Angabe-informationen darüber, ob die verteilte Einheit (DU) E-UTRA-NR-Dual-Connectivity (EN-DC) unterstützt, Multiplexmuster, das von der verteilten Einheit (DU) unterstützt wird, Unterträgerabstands-(SCS)-Informationen, die von einer Antennen-konfiguration unterstützt werden, die der verteilten Einheit (DU) entspricht, Planungsmuster, das von der verteilten Einheit (DU) unterstützt wird, Informationen zur Funktion des diskontinuierlichen Empfangs (DRX) der verteilten Einheit (DU), präemptive Funktionsinformationen zum Pufferstatusbericht (BSR), die der DU entsprechen, Funktionsinformationen zur Hop-by-Hop-Flusssteuerung im Downlink der DU, Funktionsinformationen für den inaktiven Zustand der Funkressourcensteuerung (RRC), die der DU entsprechen, Funktionsinformationen für den RRC-Leerlaufzustand, die der DU entsprechen, Verkehrsklassen-informationen, die von der DU unterstützt werden, und Fähigkeitsinformationen bezüglich Mehrantennenübertragung (MIMO), die von der DU unterstützt werden.

12. Ein Netzmigrationsverfahren, umfassend:
Empfangen (206) durch einen Knoten des integrierten Zugriffs und Backhauls (IAB) von ersten Konfigurationsinformationen, die von einer zentralen Einheit (CU) der Quelle gesendet werden, wobei die ersten Konfigurationsinformationen Informationen zur Netzmigration sind, die von einer Ziel-CU für eine verteilte Einheit (DU) des IAB-Knotens konfiguriert wurden; und
Durchführen (207) eines Migrationsverfahrens der DU durch den IAB-Knoten gemäß den ersten Konfigurationsinformationen;
wobei die ersten Konfigurationsinformationen in einer Migrationsantwortnachricht enthalten sind und die Migrationsantwortnachricht von der Ziel-CU als Antwort auf eine Migrationsanforderungsnachricht von der Quell-CU gesendet wird;
**dadurch gekennzeichnet, dass**,
die Migrationsanforderungsnachricht ferner dritte Zielinformationen umfasst, und die dritten Zielinformationen relevante Kontextinformationen des IAB-Knotens sind; und die dritten Zielinformationen mindestens eines der Folgenden umfassen: Informationen über eine Entität des Backhaul-Anpassungsprotokolls (BAP), die dem IAB-Knoten entspricht, Konfigurationsinformationen eines Funkverbindungssteuerungs-(RLC)-Kanals des Backhaul (BH) von dem IAB- Knoten zu einem übergeordneten IAB-Knoten oder einem untergeordneten IAB-Knoten, Routing-Konfigurations-informationen des IAB-Knotens, Konfigurationsinformationen zur lokalen Auslagerung des IAB-Knotens, Konfigurationsinformationen zur Trägerzuordnung des IAB-Knotens, Überlastungsstatusinformationen einer Route oder eines BH-RLC-Kanals, Mess-konfigurationsinformationen des IAB-Knotens für eine New-Radio-(NR)-Zelle oder eine Long-Term-Evolution-(LTE)-Zelle und Internetprotokoll-(IP)-Adressinformationen, die dem IAB-Knoten entsprechen;
die Migrationsantwortnachricht ferner Ziel-Routing-Konfigurationsinformationen umfasst, die von der Ziel-CU für den IAB-Knoten konfiguriert werden, und die Ziel-Routing-Konfigurationsinformationen verwendet werden, um eine DatenWeiterleitungs-Routing-Beziehung des IAB-Knotens in einem von der Ziel-CU gesteuerten Netz anzugeben.

13. Eine zentrale Einheit (CU), umfassend einen Prozessor, einen Speicher und ein Programm oder Weisungen, die in dem Speicher gespeichert sind und auf dem Prozessor ausgeführt werden können, wobei, wenn das Programm oder die Weisungen durch den Prozessor ausgeführt werden, die Schritte des Verfahrens zur Netzmigration nach einem der Ansprüche 1 bis 6 implementiert werden.

14. Eine zentrale Einheit (CU), umfassend einen Prozessor, einen Speicher und ein Programm oder Weisungen, die in dem Speicher gespeichert sind und auf dem Prozessor ausgeführt werden können, wobei, wenn das Programm oder die Weisungen durch den Prozessor ausgeführt werden, die Schritte des Verfahrens zur Netzmigration nach einem der Ansprüche 7 bis 11 implementiert werden.

15. Ein Kommunikationssystem, umfassend einen Knoten für integrierten Zugriff und Backhaul (IAB), eine zentrale Quelleinheit (CU) und eine Ziel-CU, umfassend einen Prozessor, einen Speicher, und ein Programm oder Weisungen, die in dem Speicher gespeichert sind und auf dem Prozessor ausgeführt werden können, wobei, wenn das Programm oder die Weisungen durch den Prozessor ausgeführt werden, die Schritte des Verfahrens zur Netzmigration nach Anspruch 12 implementiert werden.

## Revendications

1. Un procédé de migration de réseau, dans lequel le procédé comprend :
l'envoi (201), par une unité centralisée source, CU, d'une demande de migration par message à une unité centralisée cible, dans lequel le message de demande de migration comprend des premières informations cibles, et les premières informations cibles sont des informations de contexte d'une unité distribuée, DU, d'un nœud d'accès et liaison de raccordement intégrés, IAB, en cours de migration ;
la réception (204), par l'unité centralisée source, d'un message de réponse de migration envoyé par l'unité centralisée cible, dans lequel le message de réponse de migration comprend des premières informations de configuration, et les premières informations de configuration sont des informations pour la migration de réseau configurées par l'unité centralisée cible pour l'unité distribuée ; et
l'envoi (205), par l'unité centralisée source, des premières informations de configuration au nœud IAB, dans lequel les premières informations de configuration sont destinées à être utilisées par le nœud IAB pour mettre en œuvre une procédure de migration de l'unité distribuée ;
**caractérisé en ce que**,
le message de demande de migration comprend en outre des troisièmes informations cibles, et les troisièmes informations cibles sont des informations de contexte pertinentes du nœud IAB; et les troisièmes informations cibles comprennent au moins un des éléments suivants : des informations concernant une entité BAP correspondant au nœud IAB, des informations de configuration d'un canal de commande de liaison radio RLC de liaison de raccordement BH du nœud IAB à un nœud IAB parent ou à un nœud IAB enfant, des informations de configuration de routage du nœud IAB, des informations de configuration de déchargement local du nœud IAB, des informations de configuration de mappage de supports du nœud IAB, des informations d'état de congestion d'une route ou d'un canal RLC de BH, des informations de configuration de mesure du nœud IAB pour une cellule de nouvelle radio NR ou d'évolution à long terme LTE, et des informations d'adresse de protocole Internet IP correspondant au nœud IAB ;
le message de réponse de migration comprend en outre des informations de configuration de routage cibles qui sont configurées par l'unité centralisée cible pour le nœud IAB, et les informations de configuration de routage cibles sont utilisées pour indiquer une relation de routage de transfert de données du nœud IAB dans un réseau commandé par l' unité centralisée cible.

2. Le procédé selon la revendication 1, dans lequel le message de demande de migration comprend en outre comprend des deuxièmes informations cibles, et les deuxièmes informations cibles sont des informations de contexte d'une terminaison mobile MT du nœud IAB ; et le message de réponse de migration comprend en outre des deuxièmes informations de configuration, et les deuxièmes informations de configuration sont des informations pour la migration de réseau configurées par l'unité centralisée cible pour la terminaison mobile MT ; et
le procédé comprend en outre :
l'envoi (301), par l'unité centralisée source, des deuxièmes informations de configuration au nœud IAB, dans lequel les deuxièmes informations de configuration sont destinées à être utilisées par le nœud IAB pour mettre en œuvre une procédure de migration de la terminaison mobile MT.

3. Le procédé selon la revendication 2, dans lequel les deuxièmes informations de configuration comprennent au moins l'un des éléments suivants : des informations de support radio de signalisation SRB, des informations de support radio de données DRB, des informations de cellule de desserte, des informations de commande de puissance, des informations de rapport de mesure, des informations de configuration de cellule d'interface Uu de l'unité distribuée, des informations de configuration de ressources temps-fréquence, et des informations de routage.

4. Le procédé selon la revendication 1, dans lequel les premières informations cibles comprennent au moins l'un des éléments suivants : des informations système de l'unité distribuée, des informations de bloc de signaux de synchronisation SSB de l'unité distribuée, des informations d'identité de cellule physique PCI de l'unité distribuée, des informations de code de zone de suivi TAC de l'unité distribuée, des informations de code de zone de notification du réseau d'accès radio RAN RANAC de l'unité distribuée, des informations de liaison montante et de liaison descendante de l'unité distribuée, des informations de capacité de l'unité distribuée, une charge de liaison montante et de liaison descendante de l'unité distribuée, des informations de répartition de puissance entre l'unité distribuée et une terminaison mobile MT du nœud IAB, des informations de symboles de garde correspondant à l'unité distribuée, et des informations d'interférence d'une liaison de raccordement correspondant à l'unité distribuée.

5. Le procédé selon la revendication 4, dans lequel les informations système de l'unité distribuée sont l'un quelconque des éléments suivants : des informations de bloc d'informations maître MIB, des informations de bloc d'informations système SIB cible, et d'autres informations de SIB, dans lequel les autres informations de SIB sont des informations de SIB autres que les informations de SIB cible ; et
les informations système de l'unité distribuée comprennent au moins l'un des éléments suivants : des informations de réseau mobile terrestre public PLMN d'une cellule correspondant à l'unité distribuée, des informations de configuration de partie de bande passante BWP correspondant à l'unité distribuée, informations de configuration de porteuse correspondant à l'unité distribuée, configuration de tranche informations correspondant à l'unité distribuée, configuration générale d'accès aléatoire informations correspondant à l'unité distribuée, accès aléatoire spécifique à l'accès et liaison de raccordement intégrés informations de configuration correspondant à l'unité distribuée, configuration de radiomessagerie informations correspondant à l'unité distribuée, informations de cellule voisine correspondant à l'unité distribuée, informations de configuration de sélection de cellule correspondant à l'unité distribuée, configuration de transmission de message de diffusion informations correspondant à l'unité distribuée, et configuration de ressources radio informations correspondant à l'unité distribuée.

6. Le procédé selon la revendication 4, dans lequel les informations de capacité de l'unité distribuée comprennent au moins l'un des éléments suivants : la latence de traitement de programmation/transmission/réception de l'unité distribuée, les informations de radiofréquence de l'unité distribuée, la bande et la porteuse prises en charge par l'unité distribuée, la plage de réglage dynamique de puissance de l'unité distribuée, les informations d'indication indiquant si l'unité distribuée prend en charge la double connectivité, les informations d'indication indiquant si l'unité distribuée prend en charge la double connectivité E-UTRA-NR (EN-DC), le schéma de multiplexage pris en charge par l'unité distribuée, les informations d'espacement des sous-porteuses SCS prises en charge par une configuration d'antenne correspondant à l'unité distribuée, le schéma de programmation pris en charge par l'unité distribuée, les informations de fonction de réception discontinue DRX de l'unité distribuée, les informations de fonction de rapport d'état de tampon BSR préemptif correspondant à l'unité distribuée, les informations de fonction de commande de flux descendant saut par saut de l'unité distribuée, les informations de fonction d'état inactif de commande de ressources radio RRC correspondant à l'unité distribuée, les informations de fonction d'état de veille RRC correspondant à l'unité distribuée, les informations de classe de trafic prises en charge par l'unité distribuée, et les informations de capacité connexes relatives aux entrées multiples et sorties multiples MIMO prises en charge par l'unité distribuée.

7. Un procédé de migration de réseau, dans lequel le procédé comprend :
la réception (202), par une unité centralisée cible, CU, d'un message de demande de migration envoyé par une unité centralisée source, dans lequel le message de demande de migration comprend des premières informations cibles, et les premières informations cibles sont des informations de contexte d'une unité distribuée, DU, d'un nœud à accès et liaison de raccordement intégrés, IAB, en migration ;
et
l'envoi (203), par l'unité centralisée cible, d'un message de réponse de migration à l'unité centralisée source selon le message de demande de migration, dans lequel le message de réponse de migration comprend de premières informations de configuration, et les premières informations de configuration sont des informations pour la migration de réseau configurées par l'unité centralisée cible pour l'unité distribuée ;
**caractérisé en ce que**,
le message de demande de migration comprend en outre des troisièmes informations cibles, et les troisièmes informations cibles sont des informations de contexte pertinentes du nœud IAB ; et les troisièmes informations cibles comprennent au moins un des éléments suivants : des informations concernant une entité BAP correspondant au nœud IAB, des informations de configuration d'un canal de commande de liaison radio RLC de liaison de raccordement BH depuis le nœud IAB vers un nœud IAB parent ou un nœud IAB enfant, des informations de configuration de routage du nœud IAB, des informations de configuration de déchargement local du nœud IAB, des informations de configuration de mappage de supports du nœud IAB, des informations d'état de congestion d'une route ou d'un canal RLC de liaison de raccordement BH, des informations de configuration de mesure du nœud IAB pour une cellule de nouvelle radio NR ou une cellule d'évolution à long terme LTE, et des informations d'adresse de protocole Internet IP correspondant au nœud IAB ;
le message de réponse de migration comprend en outre des informations de configuration de routage cible qui sont configurées par l'unité centralisée cible pour le nœud IAB, et les informations de configuration de routage cible sont utilisées pour indiquer une relation de routage de transfert de données du nœud IAB dans un réseau commandé par l'unité centralisée cible.

8. Le procédé selon la revendication 7, dans lequel le message de demande de migration comprend en outre des deuxièmes informations cibles, et les deuxièmes informations cibles sont des informations de contexte d'une terminaison mobile MT du nœud IAB ; et
le message de réponse de migration comprend en outre des deuxièmes informations de configuration et les deuxièmes informations de configuration sont des informations pour la migration de réseau configurées par l'unité centralisée cible pour la terminaison mobile.

9. Le procédé selon la revendication 7, dans lequel les premières informations cibles comprennent au moins un des éléments suivants : des informations système de l'unité distribuée, des informations de bloc de signaux de synchronisation SSB de l'unité distribuée, des informations d'identité de cellule physique PCI de l'unité distribuée, des informations de code de zone de suivi TAC de l'unité distribuée, de réseau d'accès radio RAN des informations de code de zone de notification RANAC de l'unité distribuée, des informations de liaison montante et de liaison descendante de l'unité distribuée, des informations de capacité de l'unité distribuée, une charge de liaison montante et de liaison descendante de l'unité distribuée, des informations de répartition de puissance entre l'unité distribuée et une terminaison mobile de l'unité distribuée du nœud IAB, des informations de symboles de garde correspondant à l'unité distribuée, et des informations d'interférence d'une liaison de raccordement correspondant à l'unité distribuée.

10. Le procédé selon la revendication 9, dans lequel les informations système de l'unité distribuée sont l'une quelconque des informations suivantes : des informations de bloc d'informations maître MIB, des informations de bloc d'informations système SIB cible, et d'autres informations de SIB, dans lequel les autres informations de SIB sont des informations de SIB autres que les informations de SIB cible ; et
les informations système de l'unité distribuée comprennent au moins l'un des éléments suivants : des informations de réseau mobile terrestre public PLMN d'une cellule correspondant à l'unité distribuée, des informations de configuration de partie de bande passante BWP correspondant à l'unité distribuée, des informations de configuration de porteuse correspondant à l'unité distribuée, et des informations de configuration de tranche correspondant à l'unité distribuée, des informations de configuration d'accès aléatoire général correspondant à l'unité distribuée, des informations de configuration de radiomessagerie correspondant à l'unité distribuée, des informations de cellules voisines correspondant à l'unité distribuée, des informations de configuration de sélection de cellule correspondant à l'unité distribuée, des informations de configuration de transmission de message de diffusion correspondant à l'unité distribuée, et des informations de configuration de ressources radio correspondant à l'unité distribuée.

11. Le procédé selon la revendication 9, dans lequel les informations de capacité de l'unité distribuée comprennent au moins l'un des éléments suivants : une latence de traitement de programmation/transmission/réception de l'unité distribuée, des informations de radiofréquence de l'unité distribuée, une bande et une porteuse prises en charge par l'unité distribuée, une plage de réglage dynamique de puissance de l'unité distribuée, des informations indiquant si l'unité distribuée prend en charge la double connectivité, des informations indiquant si l'unité distribuée prend en charge la double connectivité E-UTRA-NR (EN-DC), un schéma de multiplexage pris en charge par l'unité distribuée, des informations d'espacement des sous-porteuses SCS prises en charge par une configuration d'antenne correspondant à l'unité distribuée, un schéma de programmation pris en charge par l'unité distribuée, des informations de fonction de réception discontinue DRX de l'unité distribuée, préemptive informations de fonction de rapport d'état de tampon BSR correspondant à l'unité distribuée, informations de fonction de commande de flux de saut en saut en liaison descendante de l'unité distribuée, informations de fonction d'état inactif de commande de ressources radio RRC correspondant à la DU, informations de fonction d'état inactif RRC correspondant à l'unité distribuée, informations de classe de trafic prises en charge par l'unité distribuée, et informations de capacité liées aux entrées multiples et sorties multiples MIMO prises en charge par l'unité distribuée.

12. Procédé de migration de réseau, comprenant :
la réception (206), par un nœud d'accès et liaison de raccordement intégrés, IAB, de premières informations de configuration envoyées par une unité centralisée source, CU, dans lequel les premières informations de configuration sont des informations pour la migration de réseau configurées par une unité centralisée cible pour une unité distribuée, DU, du nœud IAB ; et
la mise en œuvre (207), par le nœud IAB, d'une procédure de migration de la DU selon les premières informations de configuration ;
dans lequel les premières informations de configuration sont comprises dans un message de réponse de migration, et le message de réponse de migration est envoyé par l'unité centralisée cible en réponse à un message de demande de migration provenant de l'unité centralisée source ;
**caractérisé en ce que**,
le message de demande de migration comprend en outre des troisièmes informations cibles, et les troisièmes informations cibles sont des informations de contexte pertinentes du nœud IAB ; et les troisièmes informations cibles comprennent au moins un des éléments suivants : des informations concernant une entité BAP correspondant au nœud IAB, des informations de configuration d'un canal de commande de liaison radio RLC de liaison de raccordement BH allant du nœud IAB à un nœud IAB parent ou à un nœud IAB enfant, des informations de configuration de routage du nœud IAB, des informations de configuration de déchargement local du nœud IAB, des informations de configuration de mise en correspondance des supports du nœud IAB, des informations d'état de congestion d'une route ou d'un canal RLC de liaison de raccordement BH, des informations de configuration de mesure du nœud IAB pour une cellule de nouvelle radio NR ou une cellule d'évolution à long terme LTE, et des informations d'adresse de protocole Internet IP correspondant au nœud IAB ;
le message de réponse de migration comprend en outre des informations de configuration de routage cible qui sont configurées par l'unité centralisée cible pour le nœud IAB, et les informations de configuration de routage cible sont utilisées pour indiquer des données relation de routage d'acheminement du nœud IAB dans un réseau commandé par l' unité centralisée cible.

13. Une unité centralisée CU, comprenant un processeur, une mémoire, et un programme ou des instructions stockés dans la mémoire et capables de s'exécuter sur le processeur, dans lequel lorsque le programme ou les instructions sont exécutés par le processeur, les étapes du procédé de migration de réseau selon l'une quelconque des revendications 1 à 6 sont mises en œuvre.

14. Une unité centralisée CU, comprenant un processeur, une mémoire, et un programme ou des instructions stockés dans la mémoire et capables de s'exécuter sur le processeur, dans lequel lorsque le programme ou les instructions sont exécutés par le processeur, les étapes du procédé de migration de réseau selon l'une quelconque des revendications 7 à 11 sont mises en œuvre.

15. Un système de communication comprenant un nœud d'accès et de liaison de raccordement intégrés IAB, une unité centralisée source CU, et une unité centralisée cible CU comprenant un processeur, une mémoire, et un programme ou des instructions stockés dans la mémoire et capables de s'exécuter sur le processeur, dans lequel lorsque le programme ou les instructions sont exécutés par le processeur, les étapes du procédé de migration de réseau selon la revendication 12 sont mises en œuvre.
